Europäisches Patentamt

European Patent Office

Office européen des brevets

(11) Veröffentlichungsnummer: **0 338 990**
**A2**

(12) # EUROPÄISCHE PATENTANMELDUNG

(21) Anmeldenummer: **89810283.5**

(22) Anmeldetag: **12.04.89**

(51) Int. Cl.⁴: **G 03 C 5/395**

(30) Priorität: 21.04.88 CH 1469/88

(43) Veröffentlichungstag der Anmeldung:
25.10.89 Patentblatt 89/43

(84) Benannte Vertragsstaaten:
BE CH DE FR GB IT LI NL

(71) Anmelder: **ILFORD AG**
**Industriestrasse 15**
**CH-1701 Fribourg (CH)**

(72) Erfinder: **Andrey, Gilbert**
**Avenue Général Guisan 46**
**CH-1700 Fribourg (CH)**

(74) Vertreter: **Matthews, Richard Nordan**
**Ilford Limited Patents Department Mobberley**
**Knutsford, Cheshire, WA16 7HA (GB)**

(54) Verfahren zur Entsilberung von jodidhaltigen photographischen Fixierbädern.

(57) Entsilberung jodidhaltiger photographischer Fixierbäder
durch Verwendung von Polyaminocarbonsäuren.

EP 0 338 990 A2

Bundesdruckerei Berlin

**Beschreibung**

### Verfahren zur Entsilberung von jodidhaltigen photographischen Fixierbädern

Die vorliegende Erfindung betrifft ein Verfahren zur Entsilberung von jodidhaltigen photographischen Fixierbädern.

Es sind bereits verschiedene Verfahren zur Entsilberung photographischer Verarbeitungslösungen bekannt. Eine Uebersicht über diese Verfahren findet sich bei G. Kolf in "Chemie für Labor und Betrieb" 32. (1981) Seiten 43 bis 48. Ein weit verbreitetes und besonders einfaches Verfahren zur Entsilberung photographischer Verarbeitungsbäder, insbesondere Fixierbäder, besteht in der Reduktion der gelösten Silberionen zu metallischem Silber durch Eisenwolle, wobei eine dem Silber äquivalente Menge an Eisenionen in Lösung geht. Dieses Verfahren hat jedoch den Nachteil, dass Fixierbäder, die gleichzeitig auch noch Jodidionen enthalten, nur sehr unvollständig entsilbert werden.

Derartige Fixierbäder fallen beispielsweise bei der Verarbeitung von Silberfarbbleichmaterialien an, wie es in DE-C-2 448 433 beschrieben ist. Solche Materialien werden nach der Entwicklung üblicherweise mit kombinierten Silber- und Farbbleichbädern behandelt, welche Jodid als Liganden enthalten. In diesen Bleichbädern wird das gesamte Silber und Silberhalogenid der Silberfarbbleichmaterialien in Silberjodid umgewandelt, das dann im folgenden Fixierschritt herausgelöst wird. Derartige Fixierbäder enthalten daher äquimolare Mengen Jodid und Silber. Der imolare Anteil an Jodid kann aber auch höher liegen, wenn dem Fixierbad keine Zwischenwässerung vorgeschaltet ist und damit jodidhaltiges Bleichbad ins Fixierbad eingeschleppt werden kann. Es wurde nun gefunden, dass Fixierbäder, wie sie bei der Verarbeitung von Silberfarbbleichmaterialien anfallen, trotz ihres hohen Jodidgehalts praktisch vollständig nach dem Eisenaustauschverfahren entsilbert werden können, wenn bei der Entsilberung Polyaminocarbonsäuren zugegen sind.

Gegenstand der vorliegenden Erfindung ist daher ein Verfahren zur Entsilberung photographischer jodidhaltiger Fixierbäder nach dem Eisenaustauschverfahren, dadurch gekennzeichnet, dass die Entsilberung in Gegenwart von Polyaminocarbonsäuren durchgeführt wird.

Gegenstand der Erfindung ist auch die Verwendung von Polyaminocarbonsäuren zur Entsilberung jodidhaltiger Fixierbäder nach dem Eisenaustauschverfahren.

Für das erfindungsgemässe Verfahren besonders geeignete Polyaminocarbonsäuren sind z.B. Aethylendiamin-tetraessigsäure Tetranatriumsalz Tetrahydrat (EDTA), Diäthylentriamin-pentaessigsäure (DTPA), trans-1,2-Diamino-cyclohexan-N,N,N',N'-tetraessigsäure Monohydrat (CDTA) und N-(2-Hydroxyäthyl)äthylendiamin-N,N',N'-triessigsäure Trinatriumsalz Dihydrat (HEDTA), wobei EDTA bevorzugt verwendet wird. Es können auch Mischungen von Polyaminocarbonsäuren eingesetzt werden.

Die erfindungsgemäss verwendeten Polyaminocarbonsäuren werden Fixierbädern der üblichen Zusammensetzung vorzugsweise in Mengen von 5 bis 50 g/l, insbesondere 10 bis 20 g/l zugesetzt. Die Polyaminocarbonsäuren beeinflussen weder die Fixiergeschwindigkeit noch die Kapazität dieser Fixierbäder. Sie können daher schon den frischen Fixierbädern zugesetzt werden, sie können aber auch erst unmittelbar vor der Entsilberung den bereits erschöpften Fixierbädern zugegeben werden.

In einer bevorzugten Ausführungsform des erfindungsgemässen Verfahrens wird das zu entsilbernde jodidhaltige Fixierbad mit Wasser verdünnt. Dadurch kann die Entsilberung weiter verbessert werden. So ist es z.B. vorteilhaft, das erschöpfte Fixierbad mit dem ebenfalls silberhaltigen Waschwasser der Schlusswässerung zu verdünnen und dann zu entsilbern. Es hat sich gezeigt, dass eine Verdünnung des Fixierbads auf etwa das zweifache seines Volumens sehr gute Resultate ergibt.

In einer weiteren bevorzugten Ausführungsform des erfindungsgemässen Verfahrens werden die jodidhaltigen Fixierbäder mit Wasser auf das doppelte Volumen verdünnt, mit EDTA versetzt und dann entsilbert.

Die folgenden Beispiele erläutern die Erfindung.

Beispiel 1

Es wurde ein Fixierbad (Vergleich) der folgenden Zusammensetzung hergestellt:

| Ammoniumthiosulfat 60 % Lösung | 300 | ml/l |
| Ammoniumbisulfit 60 % Lösung | 74,4 | ml/l |
| Ammoniak 25 % Lösung | 20,0 | ml/l |
| N-Methyl-2-pyrrolidon | 103 | g/l |
| EDTA | 2 | g/l |
| pH-Wert der Lösung | 6.30 | |
| Silberjodid | 6,5 | g/l |
| Kaliumjodid | 1,3 | g/l |

Vier weitere Fixierbäder derselben Zusammensetzung wurden hergestellt. Diesen fügte man zusätzlich jeweils 10 g/l EDTA, DTPA, CDTA bzw. HEDTA hinzu und stellte den pH-Wert der Bäder auf 6,3.

Die verschiedenen Fixierbäder liess man mit einer Durchflussgeschwindigkeit von 46 ml/min durch eine handelsübliche Entsilberungspatrone der Firma CAL-AG Refining Inc., Craig, Colorado, USA, laufen. Die zylinderförmige Patrone (Höhe 20 cm, Durchmesser 10 cm) ist mit einem Gemisch aus Eisenpulver und Kunststoffvlies gefüllt. In den so behandelten Fixierbädern wurde dann der Restsilbergehalt - jeweils nach Durchlauf bestimmter Volumina Fixierbad - bestimmt. Die Resultate sind in Tabelle 1 angegeben.

Tabelle 1

| Durchlauf (Fixierbadvolumen in Liter) | Restsilbergehalt der Fixierbäder in mg Ag/l | | | | |
|---|---|---|---|---|---|
| | ohne Zusatz (Vergleich) | + EDTA | + DTPA | + CDTA | + HEDTA |
| 2 | 5 | | | | |
| 5 | 52 | | | | |
| 10 | 198 | 7.9 | 13.4 | 8.2 | 5.4 |
| 20 | | 7.7 | | 29.5 | 5.5 |
| 30 | | 8.4 | | 11 | 6.1 |
| 40 | | 12.8 | 69.9 | 13.4 | 7.5 |
| 50 | | 9.1 | 90.6 | 61.4 | 8.1 |
| 60 | | 10.6 | | | |
| 70 | | 9.2 | | | |
| 80 | | 9.1 | | | |

Dies zeigt, dass die Verwendung der erfindungsgemässen Zusätze zur Entsilberung jodidhaltiger Fixierbäder zu sehr guten Ergebnissen führt. Während nämlich das Vergleichsfixierbad bereits nach Durchlauf von 10 l einen Restsilbergehalt von 198 mg Ag/l aufweist, enthalten erfindungsgemäss behandelte Fixierbäder noch nach Durchlauf von bis zu 80 l nur geringe Restsilbermengen.

Beispiel 2

Das Fixierbad gemäss Beispiel 1 mit zusätzlichen 10 g/l EDTA (EDTA-Gesamtgehalt 12 g/l) wurde mit Wasser im Verhältnis 1:1 gemischt und in der in Beispiel 1 beschriebenen Patrone im Durchfluss entsilbert. Als Sicherheitsstufe wurde eine zweite Patrone in Serie geschaltet. Zum Vergleich wurde das Fixierbad gemäss Beispiel 1 ohne zusätzliches EDTA mit nur einer Patrone behandelt. Die Resultate sind in Tabelle 2 angegeben.

Tabelle 2

| Durchlauf (Fixierbadvolumen in Liter) | Restsilbergehalt der Fixierbäder in mg Ag/l | | |
|---|---|---|---|
| | Vergleichsbad 45 ml/min | + EDTA 75 ml/min | |
| | | nach 1. Patrone | nach 2. Patrone |
| 5 | 0.5 | | |
| 10 | 8.7 | 2.5 | 0.3 |
| 15 | 54 | | |
| 20 | 72 | 0.9 | 0.4 |
| 30 | | 1 | 0.5 |
| 40 | | 1.1 | 0.5 |
| 50 | | 1.5 | 0.6 |
| 150 | | 5.5 | 1.1 |
| 300 | | 28.7 | 1.1 |
| 450 | | 78.2 | 1.9 |
| 500 | | 160 | 12.1 |

Das Resultat zeigt, dass der Durchbruch des Silbers durch die erste Entsilberungspatrone beim Fixierbad mit EDTA-Zusatz erst bei ca. 150 l eintritt. Beim Vergleichsbad ist dies schon bei etwa 10 l der Fall, obwohl die Durchflussgeschwindigkeit besonders gering war.

Zwei Patronen in Serie garantieren eine ausgezeichnete Entsilberung bis fast 500 Liter Fixierbad.

**Patentansprüche**

1. Verfahren zur Entsilberung photographischer jodidhaltiger Fixierbäder nach dem Eisenaustauschverfahren, dadurch gekennzeichnet, dass die Entsilberung in Gegenwart von Polyaminocarbonsäuren durchgeführt wird.

2. Verfahren nach Anspruch 1, dadurch gekennzeichnet, dass als Polyaminocarbonsäuren EDTA, DTPA, CDTA und/oder HEDTA verwendet wird.

3. Verfahren nach Anspruch 2, dadurch gekennzeichnet, dass EDTA verwendet wird.

4. Verfahren nach Anspruch 1, dadurch gekennzeichnet, dass die Polyaminocarbonsäuren in Mengen von 5 bis 50 g/l Fixierbad eingesetzt werden.

5. Verfahren nach Anspruch 4, dadurch gekennzeichnet, dass sie in Mengen von 10 bis 20 g/l eingesetzt werden.

6. Verfahren nach Anspruch 1, dadurch gekennzeichnet, dass die Fixierbäder vor der Entsilberung mit Wasser verdünnt werden.

7. Verfahren nach Anspruch 6, dadurch gekennzeichnet, dass die Fixierbäder mit dem silberhaltigen Waschwasser der Schlusswässerung verdünnt werden.

8. Verfahren nach Anspruch 6, dadurch gekennzeichnet, dass sie auf das zweifache Volumen verdünnt werden.

9. Verfahren nach einem der Ansprüche 1 bis 8, dadurch gekennzeichnet, dass die jodidhaltigen Fixierbäder mit Wasser auf das doppelte Volumen verdünnt, mit 10 g/l EDTA versetzt und dann entsilbert werden.

10. Verwendung von Polyaminocarbonsäuren zur Entsilberung jodidhaltiger Fixierbäder nach dem Eisenaustauschverfahren.

11. Verwendung nach Anspruch 10, dadurch gekennzeichnet, dass als Polyaminocarbonsäuren EDTA, DTPA, CDTA und/oder HEDTA zum Einsatz kommt.

12. Verwendung nach Anspruch 11, dadurch gekennzeichnet, dass EDTA zum Einsatz kommt.

13. Verwendung nach Anspruch 10, dadurch gekennzeichnet, dass die Polyaminocarbonsäuren in Mengen von 5 bis 50 g/l Fixierbad eingesetzt werden.

14. Verwendung nach Anspruch 13, dadurch gekennzeichnet, dass sie in Mengen von 10 bis 20 g/l eingesetzt werden.

15. Verwendung nach Anspruch 10, dadurch gekennzeichnet, dass die Polyaminocarbonsäuren frischen oder erschöpften jodidhaltigen Fixierbädern zugesetzt werden.

16. Verwendung nach Anspruch 15, dadurch gekennzeichnet, dass sie mit Wasser verdünnten Fixierbädern zugesetzt werden.